# EUROPÄISCHE PATENTSCHRIFT

(11) **EP 0 480 323 B1**
(45) Veröffentlichungstag und Bekanntmachung des Hinweises auf die Patenterteilung: **08.01.1997**
(21) Anmeldenummer: 91116941.5
(22) Anmeldetag: 04.10.1991
(51) Int. Cl.: H04B 3/32

(54) **Leitungseinrichtung zur Kompensation von Nebensprechen**
Line arrangement for compensating cross-talk
Dispositif de ligne pour compenser la diaphonie

(30) Priorität: 10.10.1990 DE 4032067
(43) Veröffentlichungstag der Anmeldung: 15.04.1992
(73) Patentinhaber: Alcatel SEL Aktiengesellschaft, D-70435 Stuttgart (DE); ALCATEL N.V., NL-1077 XX Amsterdam (NL)
(72) Erfinder: Szechenyi, Kàlmàn, W-7151 Spiegelberg (DE)
(74) Vertreter: Pohl, Herbert, Dipl.-Ing

(56) Entgegenhaltungen:
- EP-A- 0 144 067
- IEEE TRANSACTIONS ON COMMUNICATION TECHNOLOGY Bd. 38, Nr. 4, April 1990, NEW YORK US Seiten 551 - 558 HONIG ET AL 'Multichannel Signal Processing for Data Communication in the Presence of Crosstalk'

## Beschreibung

Die Erfindung betrifft eine Schaltungsanordnung zur Kompensation von Nebensprechen und von Impulsstörungen in einem digitalen Nachrichtenübertragungssystem im Bereich einer Leitungseinrichtung mit Sende- und Empfangsschaltungen gemäß dem Anspruch 1.

Bei der leitungsgebundenen, elektrischen Nachrichtenübertragung erfolgt die Signalübertragung zum Teil über Leiterpaare, die streckenweise in einem Kabel zusammengefaßt sind. Dabei befinden sich bei einer 4-Draht Übertragung die Hin- und Rückleitung in ein und demselben Kabel, wenn nicht sogar in einer Sternvierer-Anordnung innerhalb des Kabels. Je nach Teilnehmerdichte befinden sich in einem solchen Kabel eine große Anzahl von Übertragungsleitungen, die aufgrund des Kabelaufbaus durch Nebensprechen gestört sind. Diese Störungen wirken sich auf die Nachrichtenübertragung aus und können insbesondere bei der Übertragung von Signalen zwischen Datenverarbeitungsgeräten zu Fehlern im Signalinhalt führen.

Ein bekannter Weg, das Nebensprechen im Kabel zu unterdrücken, liegt nun darin, nur einen Teil der Leitungen zur Übertragung zu nutzen und/oder in einem Kabel die Leitungen durch Ausprobieren derart zu belegen, daß ein minimales Nebensprechen auftritt.

Diese Verfahren sind sehr aufwendig und führen nicht systematisch zur Unterdrückung des Nebensprechens.

Zur Kompensation des Nebensprechens zwischen der Hin- und Rückleitung eines Teilnehmers ist aus der DE 33 43 584 A1 eine Schaltung bekannt. Bei der bekannten Schaltung wird aus dem Sendesignal ein Teil abgezweigt und über ein adaptives Filter und einen Inverter ein Kompensationssignal gewonnen und dem Empfangssignal des Teilnehmers zugeführt.

Diese bekannte Schaltung weist den Nachteil auf, daß sie nur das Nebensprechen zwischen der Hin- und Rückleitung einer zusammengehörigen Sende- und Empfangseinrichtung, die zur doppelgerichteten Nachrichtenübertragung vorgesehen ist, kompensieren kann.

Eine weitere Möglichkeit zur Kompensation von Nebensprechen ist aus IEEE Transactions on Communication Technology, Bd. 38, Nr. 4, April 1990, Seiten 551 bis 558 bekannt. Im Empfänger werden Nebensprechsignale, die von mehreren Sendeleitungen induziert wurden, kompensiert. Jede der Sendeleitungen ist über ein adaptives FIR-Filter mit einer Subtrahiereinheit verbunden. Die Summe der Ausgangssignale der adaptiven FIR-Filter wird vom Empfangssignal des Empfängers subtrahiert, wodurch die Nebensprechsignale kompensiert werden. Neben den digitalen Nebensprechsignalen treten in der Regel zusätzlich Impulsstörungen auf, die im Empfänger nicht kompensiert werden können.

Der Erfindung liegt nun die Aufgabe zugrunde, eine Schaltungsanordnung zu schaffen, die störendes Nebensprechen und Impulsstörungen in einem Übertragungskabel zwischen mehr als zwei Leitungen wenigstens teilweise unterdrückt.

Diese Aufgabe wird durch die Merkmale des Anspruchs 1 gelöst.

Ein Vorteil der Erfindung liegt darin, daß die Anzahl der benutzten Leitungen in einem Übertragungskabel erhöht werden kann.

Weitere Ausgestaltungen der Erfindung sind den übrigen Ansprüchen und dem Rest der Beschreibung zu entnehmen.

Drei Ausführungsbeispiele der Erfindung werden zum Teil anhand der zwei Figuren im folgenden beschrieben. Es zeigen:
- Fig. 1: einen Ausschnitt der erfindungsgemäßen Leitungseinrichtung eines ersten Ausführungsbeispiels und
- Fig. 2: ein zweites, ergänztes Ausführungsbeispiel.

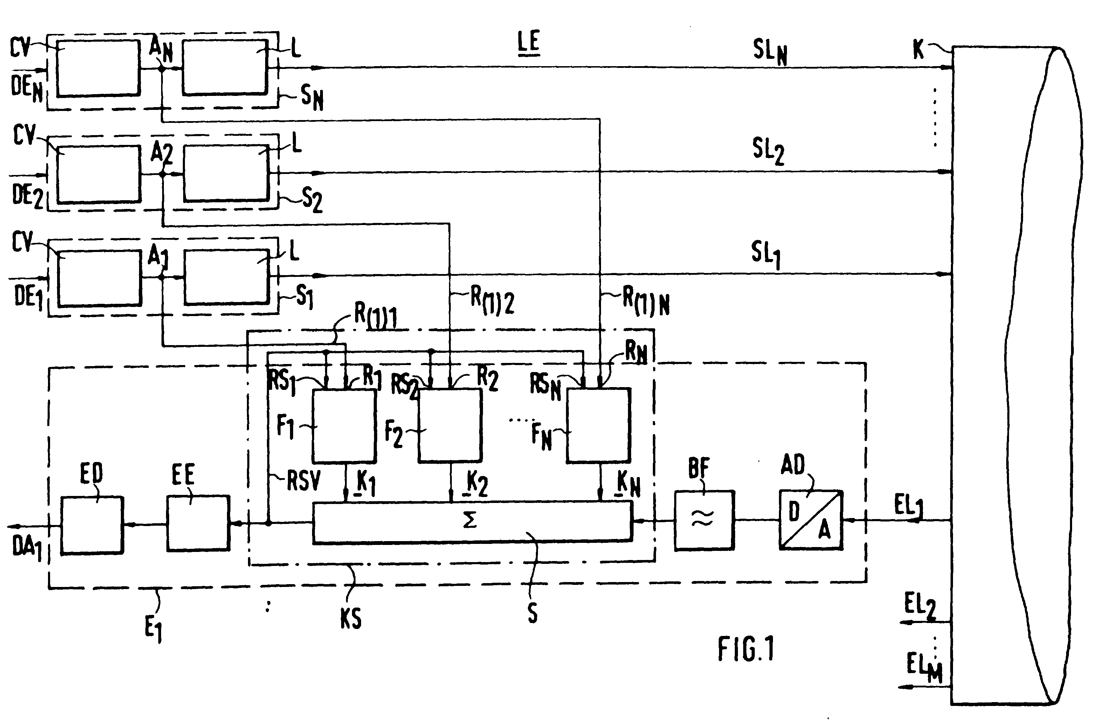

In der Fig. 1 ist eine Leitungsendeinrichtung LE für mehrere Teilnehmer eines digitalen Nachrichtenübertragungssystems, mit einer Schaltung KS zur Kompensation von Nebensprechen und andeutungsweise ein Übertragungskabel K abgebildet. In der linken Hälfte der Fig. 1 sind oben drei Sendeschaltungen S₁, S₂, S_{N} stellvertretend für N Sendeschaltungen und in der unteren Bildhälfte eine Empfangsschaltung E₁ stellvertretend für M Empfangsschaltungen abgebildet. Die Anzahl N der Sendeschaltungen S₁ bis S_{N} und die der Anzahl M der Empfangsschaltungen E₁ bis E_{M} sind in der Regel, aufgrund der unterschiedlichen Arten von Teilnehmern, nicht gleich. Das Übertragungskabel K ist am rechten Rand der Fig. 1 angedeutet. Die Sendeschaltungen S₁ bis S_{N} sind mit 2-adrigen Sendeleitungen SL₁ bis SL_{N} und die Empfangsschaltungen mit 2-adrigen Empfangsleitungen EL₁ bis EL_{N} verbunden, die zu dem Übertragungskabel K gehören. Die Verbindungen R₍₁₎₁, R₍₁₎₂, R_{(1)N}, zwischen den Sendeschaltungen S₁ bis S_{N} und der Empfangsschaltung E₁ sind stellvertretend für die Verbindungen zwischen der Sendeschaltungen S₁ bis S_{N} mit der Empfangsschaltung E₁ abgebildet und werden im folgenden als Referenzleitung R₍₁₎₁ entsprechend die beiden anderen abgebildeten Verbindungen Referenzleitungen R₍₁₎₂ und R_{(1)N} bezeichnet. Die auf den Referenzleitungen anliegenden Signale werden als Referenzsignale bezeichnet und sind mit den gleichen Bezugszeichen, wie die entsprechenden Referenzleitungen versehen.

Die Empfangsschaltung E₁ enthält eine der Anzahl der Sendeschaltungen S₁, S₂, S_{N} entsprechende Anzahl von adaptiven Filtern F₁, F₂, F_{N} , deren Signaleingänge R₁, R₂, R_{N} jeweils über die entsprechende Referenzleitung R₍₁₎₁, R₍₁₎₂, R_{(1)N} mit einer Sendeschaltung S₁, S₂, S_{N} verbunden sind. Die Signalausgänge K₁, K₂, K_{N} der Filter F₁, bis F_{N} sind jeweils mit einem Subtraktionseingang einer Subtraktionsschaltung S verbunden. An einem N+1ten Eingang, einen Addiereingang der Subtraktionsschaltung S liegt die Empfangsleitung EL₁ an. Der Ausgang der Subtraktionsschaltung S ist durch eine Regelsignalverbindung RSV mit den Regelsignaleingängen RS₁, RS₂ RS_{N} der adaptiven Filter F₁ bis F_{N} verbunden und führt gleichzeitig über eine das Ausgangssignal verarbeitende Einrichtung zum Datenausgang DA₁.

Um anzugeben, welcher Punkt innerhalb einer Sendeschaltung über die oben genannte Referenzleitung mit welchem Punkt der Empfangsschaltung verbunden ist, ist jede Sendeschaltung wie folgt aufgegliedert:

In einem ersten Teil CV befindet sich ein Coder und ein Verwürfler und in einem zweiten Teil L die restlichen zur Nachrichtenübertragung notwendigen Komponenten, die hier als Leistungsausrüstung L bezeichnet werden.

Die Empfangsschaltung E₁ enthält neben den schon beschriebenen Komponenten einen Analog/Digital-Wandler AD, ein bandbegrenzendes Filter BF, einen Entzerrer und einen Entscheider, die sich in einem Teil EE befinden, einen Entwürfler und einen Decoder, die sich in einem Teil ED befinden. In der Empfangsschaltung E₁ werden die Kompensationssignale dem Empfangssignal an entsprechender Stelle zugeführt. Im ersten Ausführungsbeispiel bedeutet dies, daß das Empfangssignal, bevor es dem Addiereingang der Subtraktionsschaltung S zugeführt wird, digitalisiert ist und das bandbegrenzende Filter durchlaufen hat. Der Ausgang der Subtraktionsschaltung S ist über den Entzerrer und Entscheider (Teil EE) und den Entwürfler und Decodierer (Teil ED) mit dem Datenausgang DA₁ verbunden.

Die aus den Sendeschaltungen S₁, S₂, S_{N}, abgezweigten Referenzsignale R₍₁₎₁, R₍₁₎₂, R_{(1)N} werden jeweils den adaptiven Filtern F₁, F₂, F_{N} der Empfangsschaltung E₁ als Eingangssignal zugeführt. Im adaptiven Filter F₁ wird dabei das Nebensprechen von der Sendeleitung SL₁ auf die Empfangsleitung EL₁, soweit es von der Sendeschaltung S₁ herrührt, simuliert. Das simulierte Signal, hier Kompensationssignal genannt, wird einem Subtraktionseingang der Subtraktionsschaltung S zugeführt und kompensiert auf diese Weise das Nebensprechen von der Sendeleitung SL₁ auf die Empfangsleitung EL₁. Die Regelung erfolgt durch Rückkoppeln des Ausgangssignales der Subtraktionsschaltung S über die Regelsignalverbindung RSV auf das adaptive Filter F₁. Diese Simulation erfolgt in bekannter Weise durch die adaptive Einstellung der Filterkoeffizienten. Die Koeffizienten werden mit den bekannten Algorithmen bestimmt. Die Maßgabe zur Einstellung der Koeffizienten ist es, das Regelsignal zu minimieren. Eine derartige Einstellung der Filterkoeffizienten ist dem Fachmann prinzipiell z.B. aus der DE 31 20 434 A1 oder aus dem IEEE Journal on Selected Areas in Communications, Vol. SAC-4, No. 8, November 1986, Seite 1337 bis 1349 bekannt und wird daher nicht weiter vertieft.

Die Kompensation des von den übrigen Sendeleitungen SL₂ bis SL_{N} auf die Empfangsleitung EL₁ gelangende Nebensprechens erfolgt mit Hilfe der Referenzsignale R(1)1 bis R(1)N und der adaptiven Filter F1 bis FN auf die gleiche, wie oben für die Sendeleitung SL₁ beschriebene Weise.

Da das Nebensprechen auch vom Leistungspegel des Übertragungssignals abhängt, und die Leitungen zwischen einer Leitungsendeinrichtung und einer Vorfeldeinrichtung in der Regel eine sehr starke Dämpfung haben, wird Nebensprechen hauptsächlich im Nahbereich der Leitungsendeinrichtungen erzeugt.

Eine gezielte Unterdrückung der Wirkung des Nebensprechens ist aus diesem Grund im Nahbereich einer Leitungsendeinrichtung von besonderer Bedeutung. Die Schaltungsanordnung KS zur Kompensation von Nebensprechen ist daher sinnvollerweise als Teil einer Leitungsendeinrichtung LE ausgebildet. Sie kann auf diese Weise mit der Leitungsendeinrichtung LE integriert und daher sehr kostengünstig realisiert werden. Auch wenn die Anzahl der Anschlüsse, die mit der Schaltungsanordnung KS zur Kompensation von Nebensprechen durch diese Integration auf die Anschlüsse einer Leitungsendeinrichtung beschränkt ist, ist mit Sicherheit der größte Anteil von Nebensprechen kompensiert, da in der Regel pro Haus nur eine Leitungsendeinrichtung LE vorliegt und Nebensprechen mit Übertragungsleitungen anderer Teilnehmer frühestens ab der nächsten Kabelverzweigung, z.B. auf der Straße oder ab der nächsten Vorfeldeinrichtung erfolgen kann.

Es ist aber durchaus denkbar, daß nicht alle Sendeschaltungen einer Leitungsendeinrichtung LE mit einer oder gar allen Empfangsschaltungen der Leitungsendeinrichtung LE durch die Schaltungsanordnung KS zur Kompensation von Nebensprechen miteinander verbunden sind. Die Schaltungsanordnung KS kann auch dazu verwendet werden, Nebensprechen zwischen leitungen verschiedener Leitungsendeinrichtungen zu kompensieren, indem zwischen den Leitungsendeinrichtungen Referenzleitungen angeordnet werden, wobei die Kompensation wie oben beschrieben stattfindet.

Die Schaltung KS läßt sich anstatt im Bereich von Leitungsendeinrichtungen auch im Bereich anderer Leitungseinrichtungen, wie z.B. einer Leitungsschnittstelleneinrichtung, anordnen.

Ferner ist die Verwendungsmöglichkeit der Schaltungsanordnung KS nicht auf eine Leitungseinrichtung eines Nachrichtenübertragungssystem beschränkt, sondern kann auch in der Verwendung in einer Nebenstellenanlage oder einer Rechneranlage mit mehreren Arbeitsplätzen, also überall dort, wo störendes Nebensprechen zwischen mehreren Leitungen stattfindet, gesehen werden.

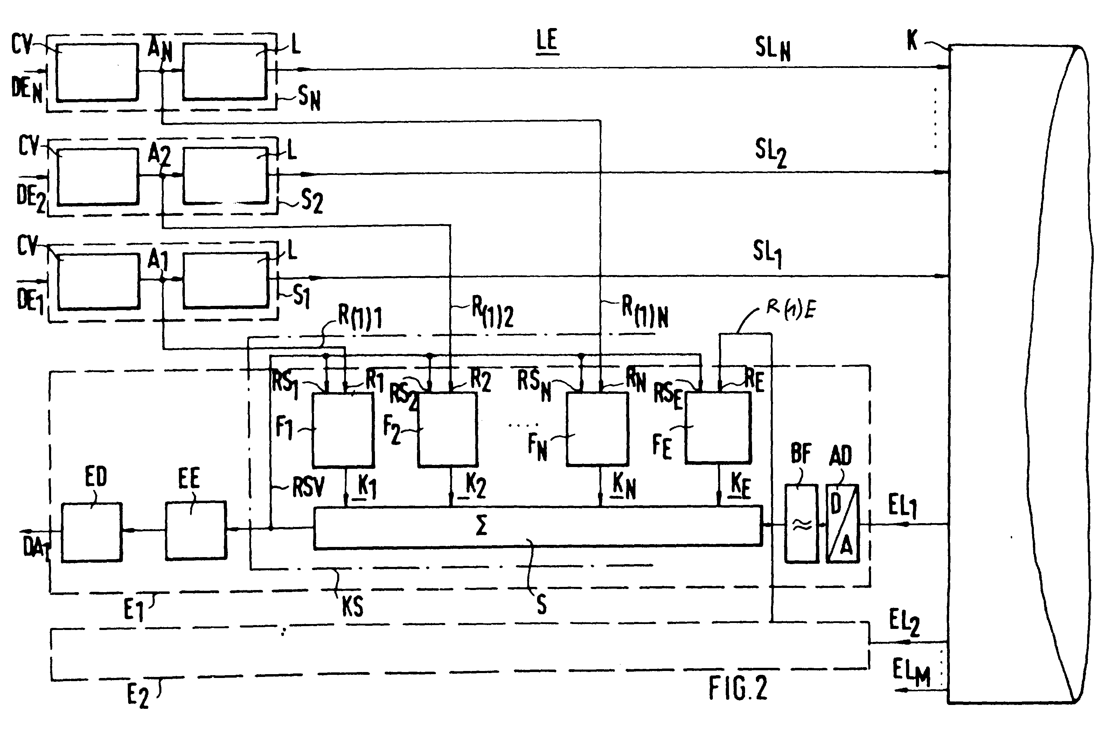

Das erste Ausführungsbeispiel beschränkt sich auf die Kompensation von Nebensprechen, das von Sendeschaltungen verursacht wird, da dies wie oben beschrieben die hauptsächliche Störung darstellt. In einem zweiten Ausführungsbeispiel, das in Fig. 2 abgebildet ist, hat die Schaltungsanordnung KS zur Kompensation von Nebensprechen, als Erweiterung zu der im ersten Ausführungsbeispiel beschriebenen Ausführung eine Verbindung der Empfangsschaltung E₁ mit einer zweiten Empfangsschaltung E₂. Die Empfangsschaltung E₂ ist nur schematisch abgebildet. Sie enthält die gleichen Elemente wie die Empfangsschaltung E₁ und ist wie die Empfangsschaltung E₁ über Referenzleitungen (nicht abgebildet) mit den Sendeschaltungen S₁, S₂, S_{N} verbunden. Aus dem Empfangssignal der zweiten Empfangsschaltung E₂ wird vor der Substraktionsschaltung S (nicht abgebildet) ein Empfangsreferenzsignal R_{(1)E} abgezweigt und der ersten Empfangsschaltung E₁, wie die Referenzsignale R₍₁₎₁ bis R_{(1)N} zugeführt und über ein zusätzliches Filter F_{E} entsprechend verarbeitet, so daß ein zusätzliches Kompensationssignal K_{E} entsteht. Auf diese Weise wird auch das Nebensprechen von der Empfangsleitung EL₂ der zweiten Empfangsschaltung E₂ auf die Empfangsleitung EL₁ der ersten Empfangsschaltung E₁ kompensiert. Dies ist z.B. dann zu empfehlen, wenn die zweite Empfangsleitung EL₂ für die Übertragung mit einer Bitfolgefrequenz von 2 Mbit/s vorgesehen ist oder allgemein störendes Nebensprechen von der Empfangsleitung EL₂ auf die erste Empfangsleitung EL₁ zu erwarten ist. Wenn es zweckdienlich ist, kann das Nebensprechen von weiteren Empfangsleitungen auf gleiche Weise kompensiert werden.

Die Schaltungsanordnung KS zur Kompensation von Nebensprechen ermöglicht es bei Übertragungskabeln, bei denen Leitungen nicht zur Übertragung, sondern zur Unterdrückgung von Nebensprechen herangezogen wurden, auch diese zur Übertragung zu verwenden. Ferner ermöglicht sie es, daß zwei Leitungen zur Übertragung mit einer Bitfolgefrequenz von 2 MBit/s in einem Übertragungskabel dicht benachbart angeordnet sein können, ohne daß störendes Nebensprechen zwischen diesen beiden Leitungen entsteht.

Ein drittes Ausführungsbeispiel (nicht abgebildet) weist gegenüber den ersten beiden Ausführungsbeispielen, zusätzlich eine Vorrichtung zur Kompensation von Impulsstörungen auf. Solche Impulsstörungen können sowohl von außen in ein Übertragungskabel als auch von Leitungen innerhalb eines Übertragungskabels auf andere Leitungen wirken. Sie können daher nur bedingt durch Vorrichtungen zur Kompensation von Nebensprechen kompensiert werden.

Zur Kompensation von Impulsstörungen ist eine Referenzleitung über einen Umsetzer mit der Empfangsleitung verbunden. Tritt nun im Kabel eine Impulsstörung auf, wird diese sowohl in der Referenzleitung als auch in der Empfangsleitung gleichermaßen induziert. Die aus der Referenzleitung gewonnene Referenzimpulsstörung wird über den Umsetzer dem Subtraktionseingang eines Subtraktionsgliedes der Empfangsleitung zugeführt und kompensiert dort die Impulsstörung.

Der Umsetzer kann im einfachsten Fall aus einem Stück Leitung bestehen, vorteilhafterweise hat er ein adaptives Filter zur Erzeugung eines Simulationssignals.

Als Referenzleitung kann eine im Übertragungskabel befindliche Blindleitung verwendet werden. Wird anstelle der Blindleitung eine Sendeleitung oder eine der anderen Empfangsleitungen als Referenzleitung verwendet, ist eine zusätzliche Maßnahme zur Kompensation des auf diesen Leitungen anliegenden Sendesignals oder Empfangssignals erforderlich. Hierzu wird das Sende- oder Empfangssignal über ein adaptives Filter in bekannter Weise simuliert und anschließend in bekannter Weise vom Signal subtrahiert, und daraus das Kompensationssignal zur Unterdrückung von Impulsstörungen gewonnen wird.

## Patentansprüche

1. Leitungseinrichtung, vorzugsweise eine Leitungsendeinrichtung (LE) eines Nachrichtenübertragungssystems, die Sendeschaltungen (Sᵢ, i = 1,2,...,N), die mit Sendeleitungen (SLᵢ, i = 1,2,...,N) verbunden sind, Empfangsschaltungen (Eⱼ, j = 1,2,...,M), die mit Empfangsleitungen (ELⱼ, j = j=1,2,...,M) verbunden sind, und eine Vorrichtung zur Kompensation von Impulsstörungen enthält, und die folgende Merkmale aufweist:
- wenigstens eine Empfangsschaltung (Eⱼ) enthält eine Schaltungsanordnung (KS) zur Kompensation von Nebensprechen,
- mehrere Sendeschaltungen (Sᵢ) geben für die wenigstens eine Empfangsschaltung (E₁) mit der Schaltungsanordnung (KS) zur Kompensation von Nebensprechen jeweils ein, von dem von ihnen zu erzeugenden Sendesignal abgezweigtes, Referenzsignal (R₍₁₎ᵢ, i = 1, 2, ..., N) aus,
- jede Schaltungsanordnung (KS) zur Kompensation von Nebensprechen enthält für jedes Referenzsignal (R₍₁₎ᵢ) ein regelbares adaptives Filter (Fᵢ), das aus dem jeweiligen Referenzsignal (R₍₁₎ᵢ) ein Kompensationssignal (Kⱼ, i = 1, 2 ..., N) ableitet, und eine Substraktionsschaltung (S), die die Summe der Kompensationssignale (Kᵢ) vom Empfangssignal der Empfangsschaltung (E₁) subtrahiert und dessen Ausgangssignal das Regelsignal der adaptiven Filter (Fᵢ, i = 1, 2, ..., N) ist und zum Ausgangssignal (DA₁) der Empfangsschaltung (E₁) weiter verarbeitet wird,
- eine Empfangsleitung (ELⱼ) ist über die Vorrichtung zur Kompensation von Impulsstörungen mit einer Referenzleitung (SLᵢ, ELⱼ) verbunden, wobei
- in die Referenzleitung (SLᵢ, ELⱼ) und in die Empfangsleitung (ELⱼ) eine auftretende Impulsstörung etwa gleichermaßen induziert wird,
- über die Vorrichtung wird ein Kompensationssignal zur Unterdrückung der Impulsstörung in der Empfangsleitung (EL₁) auf die Empfangs leitung (EL₁) geführt.

2. Leitungseinrichtung nach Anspruch 1, dadurch gekennzeichnet, daß wenigstens eine zweite Empfangsschaltung (E₂) für die wenigstens eine Empfangsschaltung (E₁) mit der Schaltungsanordnung (KS) zur Kompensation von Nebensprechen ein, von dem von ihr empfangenen Empfangssignal abgezweigtes, Referenzsignal (R_{(1)N+1}) ausgibt.

3. Leitungseinrichtung nach einem der Ansprüche 1 oder 2, dadurch gekennzeichnet, daß sie für den Fall, daß ihre Sende- und Empfangsleitungen (SLᵢ, ELⱼ) in einem Übertragungskabel zusammen mit Sende- und Empfangsleitungen anderen Leitungseinrichtungen geführt werden, sie wenigstens mit einem Teil dieser Leitungseinrichtungen und wenigstens mit einem Teil der darin enthaltenen Sende- und Empfangsschaltungen über die Schaltungsanordnung (KS) zur Kompensation von Nebensprechen verbunden ist.

4. Leitungseinrichtung nach einem der Ansprüche 1 bis 3, dadurch gekennzeichnet, daß wenigstens zwei Sende- und/oder Empfangsschaltungen (Sᵢ, Eⱼ) für eine Bitfolgefrequenz von wenigstens 2 MBit/s vorhanden sind.

5. Leitungseinrichtung nach einem der Ansprüche 1 bis 4, dadurch gekennzeichnet, daß die adaptiven Filter transversale Filter sind und jeweils höchstens fünf Koeffizienten aufweisen.

6. Leitungseinrichtung nach Anspruch 1, dadurch gekennzeichnet, daß die Vorrichtung ein adaptives Filter zur Simulation der Impulsstörung enthält.

## Claims

1. Line equipment, preferably line terminating equipment (LE) of a communications system, comprising transmitter circuits (Sᵢ, i = 1,2, ...,N), which are connected to transmit lines (SLᵢ, i = 1,2, ...,N), receiver circuits (Eⱼ, j = 1,2, ...M), which are connected to receive lines (ELⱼ, j = 1,2, ...M), and a device for compensating impulse noise, and which has the following features:
- at least one of the receiver circuits (Eⱼ) includes a circuit arrangement (KS) for compensating crosstalk,
- several transmit circuits (Sᵢ) output to at least one receiver circuit (E₁), including the circuit arrangement (KS) for compensating crosstalk, a reference signal (R₍₁₎ᵢ, i = 1, 2, ..., N) tapped off from the respective transmit signal to be generated by them,
- each circuit arrangement (KS) for compensating crosstalk includes for each reference signal (R₍₁₎ᵢ) an adjustable adaptive filter (Fᵢ), which derives a compensation signal (Kᵢ, i = 1, 2, ..., N) from the respective reference signal (R₍₁₎ᵢ), and a subtraction circuit (S) which subtracts the sum of the compensation signals (Kᵢ) from the receive signal of the receiver circuit (E₁) and whose output signal is the control signal for the adaptive filter (Fᵢ, i = 1, 2, ..., N) and is further processed into the output signal (DA₁) of the receiver circuit (E₁),
- a receive line (ELⱼ) is connected via the device for compensating impulse noise to a reference line (SLⱼ, ELⱼ),
- impulse noise being induced more or less equally into the reference line (SLᵢ, ELⱼ) and into the receive line (ELⱼ),
- a compensation signal for suppressing the impulse noise in the receive line (EL₁) is fed via the device onto the receive line (EL₁).

2. Line equipment according to Claim 1, characterised in that at least one second receiver circuit (E₂) outputs to at least one receiver circuit (E₁), including the circuit arrangement (KS) for compensating crosstalk, a reference signal (R_{(1)N+1}) tapped off from the signal received by it.

3. Line equipment according to any one of Claims 1 or 2, characterised in that if its transmit and receive lines (SLᵢ, ELⱼ) are assembled together with transmit and receive lines of other line equipment units in one communications cable, it is connected to at least one part of said line equipment units and at least one part of the transmitter and receiver circuits contained therein via the circuit arrangement (KS) for compensating crosstalk.

4. Line equipment according to any one of Claims 1 to 3, characterised in that at least two transmitter and/or receiver circuits (Sᵢ, Eⱼ) for a bit rate of at least 2 Mb/s are present.

5. Line equipment according to any one of Claims 1 to 4, characterised in that the adaptive filters are transversal filters and each has five coefficients at the most.

6. Line equipment according to Claim 1, characterised in that the device contains an adaptive filter for simulating the impulse noise.

## Revendications

1. Equipement de ligne, de préférence équipement de terminaison de ligne (LE) d'un système de télécommunication, comprenant des circuits d'émission (Si, i = 1, 2, ..., N) qui sont raccordés à des lignes d'émission (SLi, i = 1, 2, ..., N), des circuits de réception (Ej, j = 1, 2 ..., M) qui sont raccordés à des lignes de réception (ELⱼ, j = 1, 2 ..., M), et un dispositif de compensation de bruits impulsifs, et qui présente les caractéristiques suivantes :
- au moins un circuit de réception (Ej) contient un agencement de circuit (KS) de compensation de la diaphonie,
- plusieurs circuits d'émission (Si) fournissent au circuit de réception (E1), au moins au nombre de un, comprenant l'agencement de circuit (KS) de compensation de la diaphonie, respectivement un signal de référence (R(1)i, i = 1, 2, ..., N) dérivé à partir du signal d'émission devant être produit par eux,
- chaque agencement de circuit (KS) de compensation de la diaphonie contient pour chaque signal de référence (R(1)i) un filtre adaptatif réglable (Fi) qui dérive un signal de compensation (Ki, i = 1, 2, ..., N) à partir du signal de référence (R(1)i) respectif, et un circuit de soustraction (S) qui soustrait du signal de réception du circuit de réception (E1) la somme des signaux de compensation (Ki) et dont le signal de sortie est le signal de régulation des filtres adaptatifs (Fi, i = 1, 2, ..., N) et fait l'objet d'un traitement complémentaire pour devenir le signal de sortie (DA1) du circuit de réception (E1),
- une ligne de réception (ELj) est, par le biais du dispositif de compensation des bruits impulsifs, raccordée à une ligne de référence (SLi, ELj), à l'occasion de quoi
- un bruit impulsif est induit à peu près de la même façon dans la ligne de référence (SLi, ELj) et dans la ligne de réception (ELj),
- par le biais du dispositif, un signal de compensation est conduit à la ligne de réception (EL1) pour la suppression du bruit impulsif dans la ligne de réception (EL1).

2. Equipement de ligne selon la revendication 1, caractérisé en ce que au moins un deuxième circuit de réception (E2) délivre, pour le circuit de réception (E1), au moins au nombre de un, comprenant l'agencement de circuit (KS) de compensation de la diaphonie, un signal de référence (R(1)N+1) dérivé à partir du signal de réception reçu par lui.

3. Equipement de ligne selon l'une des revendications 1 ou 2, caractérisé en ce que cet équipement, pour le cas où ses lignes d'émission et de réception (SLi, ELj) sont conduites dans un câble de transmission en même temps que des lignes d'émission et de réception d'autres équipements de ligne, est raccordé au moins à une partie de ces équipements de ligne et au moins à une partie des circuits d'émission et de réception qui y sont contenus, par le biais de l'agencement de circuit (KS) de compensation de la diaphonie.

4. Equipement de ligne selon l'une des revendications 1 à 3, caractérisé en ce que au moins deux circuits d'émission et/ou de réception (Si, Ej) sont présents pour une fréquence de séquence de bits d'au moins 2 Mbits/s.

5. Equipement de ligne selon l'une des revendications 1 à 4, caractérisé en ce que les filtres adaptatifs sont des filtres transversaux et présentent respectivement au plus cinq coefficients.

6. Equipement de ligne selon la revendication 1, caractérisé en ce que l'équipement comporte un filtre adaptatif pour la simulation du bruit impulsif.
